# EUROPÄISCHE PATENTSCHRIFT

(11) **EP 2 894 591 B1**
(45) Veröffentlichungstag und Bekanntmachung des Hinweises auf die Patenterteilung: **06.01.2021**
(21) Anmeldenummer: 15152595.3
(22) Anmeldetag: 28.11.2012
(51) Int. Cl.: G06K 19/077, G07D 7/00

(54) **Identifikationsdokument mit einer maschinenlesbaren Zone und Dokumentenlesegerät**
Identification document with a machine-readable zone and document reader device
Document d'identification avec une zone lisible à l'aide d'une machine et appareil de lecture du document

(30) Priorität: 02.12.2011 DE 102011087637
(43) Veröffentlichungstag der Anmeldung: 15.07.2015
(62) Teilanmeldung aus: 12799532.2
(73) Patentinhaber: Bundesdruckerei GmbH, 10958 Berlin (DE)
(72) Erfinder: Wolf, Andreas, 07743 Jena (DE)
(74) Vertreter: Patentship Patentanwaltsgesellschaft mbH

(56) Entgegenhaltungen:
- DE-A1- 3 330 261
- DE-A1- 10 317 257
- DE-A1- 10 334 012
- DE-A1-102006 003 072
- DE-A1-102006 038 270
- DE-A1-102007 009 257
- DE-A1-102007 052 326
- DE-A1-102007 060 605
- DE-A1-102008 041 990
- DE-U1-202007 006 590
- US-A- 4 856 820
- US-A- 5 913 542
- US-A1- 2006 022 059
- US-B1- 6 264 106

## Beschreibung

Die vorliegende Erfindung betrifft das Gebiet der Identifikationsdokumente.

Die Offenlegungsschrift DE 33 30 261 zeigt ein Verfahren zum Codieren bzw. Decodieren von Informationen.

Die Patentschrift US 4,856,820 zeigt einen Aufkleber umfassend eine Spalte, in welcher mehrere Ziffern angeordnet sind. Die erste Spalte ist maschinenlesbar. Ferner umfasst der Aufkleber eine zweite Spalte, in welcher ein maschinenlesbarer Barcode vorgesehen ist. Der maschinenlesbare Barcode entspricht der Zahl mit den einzelnen Ziffern der ersten Spalte.

Die Offenlegungsschrift DE 10 2006 038 270 zeigt ein Sicherheits- und/oder Wertdokument mit einem Muster aus strahlungsmodifizierten Komponenten.

Die Gebrauchsmusterschrift DE 20 2007 006 590 U zeigt einen geldbetätigten Automaten mit einer Steuereinheit.

Die Offenlegungsschrift DE 10 2007 009 257 A1 zeigt ein Dokument, ein Lesegerät für ein Dokument sowie ein Verfahren zur Zugriffskontrolle und ein Computerprogrammprodukt.

Die Offenlegungsschrift DE 103 17 257 zeigt einen kontaktlosen Datenträger.

Moderne Identifikationsdokumente, wie Personalausweise oder Reisepässe verfügen üblicherweise über eine maschinenlesbare Zone (MRZ: Machine Readable Zone) gemäß ICAO Dokument 9303, in welcher Daten, wie etwa Prüfziffern, abgelegt sind.

Die MRZ ist an einer in dem ICAO Dokument 9303 spezifizierten Stelle eines Identifikationsdokumentes angeordnet. Zur automatischen Erkennung der MRZ wird diese Dokumentenstelle daher auf ein Sichtfenster eines Dokumentenlesegerätes aufgelegt. So kann ein Reisender bei Grenzkontrollanlagen, wie sie beispielsweise an Flughäfen installiert sind, seinen Reisepass auf ein Dokumentenlesegerät auflegen. Das Dokumentenlesegerät liest die Daten der MRZ aus und verwendet die ausgelesenen Daten beispielsweise zum kryptographischen Öffnen bzw. Aufsperren eines Chips eines Identifikationsdokumentes, um die in dem Chip gespeicherten Daten auslesen zu können.

Üblicherweise ist ein Sichtfenster eines Dokumentenlesegerätes jedoch nicht viel größer als ein Format eines Identifikationsdokumentes, weil unter anderem eine Antenne des Dokumentenlesegerätes um das Sichtfenster herumgeführt werden muss, um den Chip des Identifikationsdokumentes auszulesen. Wird das Identifikationsdokument mit der MRZ daher nicht passgenau auf das Sichtfenster aufgelegt, so können die in der MRZ enthaltenen Daten nicht vollständig ausgelesen werden. Dies ist insbesondere dann der Fall, wenn ein Reisender seinen Reisepass falsch, beispielsweise um 90° gedreht, auf das Dokumentenlesegerät auflegt, so dass die MRZ nur teilweise auslesbar ist. Sind die in der MRZ enthaltenen Daten nicht oder nicht vollständig lesbar, dann können diese nicht zum Öffnen des Chips bzw. zur Identifikation oder Dokumentenprüfung eingesetzt werden.

Darüber hinaus können die Eigenschaften des Identifikationsdokumentes an sich dazu beitragen, dass die MRZ optisch unter ungünstigen Bedingungen nicht vollständig ausgelesen werden kann. Ist die MRZ beispielsweise mit einer Schicht abgedeckt, welche ungünstige Reflexe erzeugt, so kann dadurch ein zuverlässiges Auslesen der in der MRZ zusammengefassten Daten erschwert werden. Eine derartige Schicht kann beispielsweise durch das Aufbringen von Sicherheitsmerkmalen, wie Laminaten oder Hologrammen, auf den Identifikationsdokumenten entstehen. So können beispielsweise laminierte Datenseiten überbelichtete Stellen auf mit Dokumentenlesern aufgenommenen Bildern erzeugen. Liegt eine solche überbelichtete Stelle auf Teilen der MRZ, so kann deren Lesbarkeit für Basic Access Control (BAC) beeinträchtigt werden, was zu einem Scheitern eines Zugriffs auf in einem Chip eines Identifikationsdokumentes gespeicherte Daten führen kann. Selbst wenn keine Reflexe im Bild sichtbar sind, so kann eine etwaige Schicht eine Detektion der verwendeten Schriften beispielsweise mittels des OCR-B-Verfahrens die Unterscheidung mancher Form-Typen, wie beispielsweise 1-L, 8-B, auch bei ausschließlicher Verwendung von Großbuchstaben in der MRZ erschweren. Enthält die MRZ Prüfziffern, so können diese aufgrund einer derartigen Schicht ggf. nicht fehlerfrei ausgelesen werden, was zu einer Verlangsamung aller Leseprozesse führen kann.

Es ist daher die Aufgabe der vorliegenden Erfindung, ein Konzept zu schaffen, mit dem die in der MRZ gespeicherten Daten sicherer ausgelesen werden können.

Diese Aufgabe wird durch die Merkmale der unabhängigen Ansprüche gelöst. Vorteilhafte Weiterbildungsformen sind Gegenstand der Beschreibung, der Zeichnungen sowie der abhängigen Ansprüche.

Die vorliegende Erfindung basiert auf der Erkenntnis, dass die obige Aufgabe durch einen Barcode, insbesondere durch einen zweidimensionalen Barcode, mit einem Duplikat der in der MRZ angeordneten Daten bereitstellt. Auf diese Weise wird ein definierter Barcodebereich mit allen oder einigen Daten der MRZ bereitgestellt, welcher geringere Ausmessungen als beispielsweise eine Dokumentenseite eines Identifikationsdokumentes aufweist. Durch Erfassen des Barcodes können die Daten der MRZ daher auch dann sicher erfasst werden, wenn das Identifikationsdokument nicht vollständig oder verdreht auf ein Sichtfenster eines Dokumentenlesegerätes aufgelegt wird. So wird selbst ein ungeschulter Benutzer eines Dokumentenlesegerätes in den Zustand versetzt, dieses selbst im Rahmen der Selbstbedienung zuverlässig zu bedienen. Ferner können beispielsweise Grenzkontrollen vollständig automatisiert und beschleunigt werden, weil die Barcode-Lesetechnologie bereits ausgereift ist. Durch die Verwendung des Barcodes mit den Daten der MRZ wird ferner die Auswirkung der Lichtreflexe auf die Lesbarkeit der MRZ reduziert, wodurch die Auslesefehlerquote deutlich reduziert werden kann.

Gemäß einem Aspekt betrifft die Erfindung ein Identifikationsdokument mit in einer maschinenlesbaren Zone (MRZ) angeordneten Daten und einem Barcode, welcher ein Duplikat der in der maschinenlesbaren Zone angeordneten Daten bereitstellt. Das Identifikationsdokument umfasst ferner einen Chip, und wobei die Daten ferner zur Erzeugung eines Berechtigungssignals zum Auslesen eines Chipinhaltes vorgesehen sind. Das Berechtigungssignal kann eine Berechtigung eines Dokumentenlesegerätes anzeigen, den Chipinhalt auszulesen.

Die Daten in dem Barcode können beispielsweise die Daten eines elektronischen Dokumentes nach ICAO Dokument 9303 digital signiert sein, indem den Daten ein Hash-Wert hinzugefügt wird.
Das Identifikationsdokument kann eines der folgenden Dokumente, mit oder ohne Elektronik, sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das Identifikationsdokument kann ferner einen Chip zum Speichern von Daten umfassen.

Gemäß einer Ausführungsform ist der Barcode ein zweidimensionaler Barcode, insbesondere ein Datamatrix-Code, ein gestapelter Barcode wie Codablock, ein QR-Code (QR: Quick Response), ein Portable Data File 417 Code oder ein Aztec-Code nach ISO/IEC 24778. Dem Barcode kann jede an sich bekannte Barcodetechnologie zugrunde liegen.

Gemäß einer Ausführungsform ist der Barcode optisch, insbesondere mittels Weißlicht, Infrarotlicht und/oder Ultraviolettlicht optisch auslesbar.

Gemäß einer Ausführungsform ist der Barcode fluoreszierend oder Wellenlängen-konvertierend.

Die Wellenlängen-Konversionseigenschaften können beispielsweise durch silicatische Pigmente, insbesondere Silicatphosphor-Pigmente, Silikat-, Sulfid-, Nitrid-, YAG-, TAG-, Thiogallate-Phospor-Pigmente, bewirkt werden, welche einer Druckfarbe zugesetzt sind, mit welcher der Barcode dargestellt ist. Ein derartiger Barcode emittiert beispielsweise ansprechend auf eine Anregung mit blauem Licht der Wellenlänge von etwa 400 nm ein farbverschobenes Lichtspektrum, das beispielsweise Licht der Farbe Grün, Gelb, Orange und/oder Rot aufweisen kann.

Gemäß einer Ausführungsform stellt der Barcode alle Daten der maschinenlesbaren Zone oder eine Teilmenge der Daten der maschinenlesbaren Zone bereit. Die Teilmenge der Daten kann beispielsweise die Prüfziffern der maschinenlesbaren Zone umfassen.

Gemäß einer Ausführungsform umfasst der Barcode ein weiteres Duplikat von außerhalb der MRZ angeordneten Daten, insbesondere von Daten aus einer visuellen Inspektionszone wie einer Angabe einer das Identifikationsdokument ausstellenden Behörde oder einer einen Besitzer des Identifikationsdokumentes betreffenden Angabe.

Gemäß einer Ausführungsform stellt der Barcode biometrische Daten, insbesondere Fingerabdruckdaten oder Physiognomiedaten, bereit. Die geometrischen Daten können beispielsweise in der Gestalt von Templates vorliegen, in denen eine reduzierte Datenmenge bereitgestellt wird. So können beispielsweise die Physiognomiedaten mittels der Templates bereitgestellt werden, wobei beispielsweise ein Augenabstand oder ein Wangenknochenabstande angegeben sein kann.

Gemäß einer Ausführungsform ist ein weiterer Barcode mit einem weiteren Duplikat der in der maschinenlesbaren Zone angeordneten Daten bereitgestellt. Auf diese Weise wird die Redundanz weiter erhöht, wodurch in vorteilhafter Weise Auslesefehler noch weiter reduziert werden können. Der Barcode und der weitere Barcode können beispielsweise auf unterschiedlichen Datenseiten, beispielsweise auf einer Vorder- und auf einer Rückseite, oder auf unterschiedlichen Einbandseiten, beispielsweise auf einem Vordereinband oder auf einem Hintereinband, angeordnet sein. Auf diese Weise wird erreicht, dass das mit mehreren Barcodes versehende Identifikationsdokument nahezu beliebig auf ein Sichtfenster eines Dokumentenlesegerätes aufgelegt werden kann.

Gemäß einer Ausführungsform ist der Barcode auf das Dokument aufklebbar. Der Barcode kann hierzu beispielsweise auf einem aufklebbaren Träger dargestellt sein. Auf diese Weise wird erreicht, dass auch bestehende Identifikationsdokumente um Barcodes mit einem Duplikat der in der maschinenlesbaren Zone abgelegten Daten versehen sein können.

Gemäß einer Ausführungsform ist der Barcode auf einem Einband, insbesondere auf einem Vordereinband oder auf einem Hintereinband, des Identifikationsdokumentes oder auf einer Datenseite des Identifikationsdokumentes angeordnet. So können der Barcode beispielsweise auf dem Vordereinband und der vorstehend genannte, weitere Barcode auf dem Hintereinband angeordnet sein.

Gemäß einem weiteren Aspekt betrifft die Erfindung ein Dokumentenlesegerät zum Erfassen eines Identifikationsdokumentes, das eine maschinenlesbare Zone mit darin angeordneten Daten und einen Barcode mit einem Duplikat der in der maschinenlesbaren Zone angeordneten Daten umfasst, mit einer optischen Aufnahmeeinrichtung zur Aufnahme des Barcodes, einem Prozessor zum Extrahieren der Daten der maschinenlesbaren Zone aus der Aufnahme des Barcodes und zum Verarbeiten der extrahierten Daten. Die Extraktion der Daten aus dem Barcode kann in an sich bekannter Weise erfolgen.

Gemäß einer Ausführungsform ist der Prozessor ausgebildet, die extrahierten Daten zur Überprüfung einer Echtheit des Identifikationsdokumentes und/oder zur Identifikation eines Benutzers des Identifikationsdokumentes anhand der aus dem Barcode extrahierten Daten zu verarbeiten. Die Verarbeitung kann MRZ-spezifisch gemäß ICEO Dokument 9303 erfolgen.

Gemäß einer Ausführungsform weist das Identifikationsdokument einen Chip auf, wobei der Prozessor ausgebildet ist, anhand der aus dem Barcode extrahierten Daten ein Berechtigungssignal zu erzeugen, um dem Chip eine Berechtigung des Dokumentenlesegerätes zum Auslesen eines Chipinhaltes anzuzeigen. Auf diese Weise kann der Chip aufgeschlossen, insbesondere kryptographisch aufgeschlossen werden.

Gemäß einer Ausführungsform ist das Dokumentenlesegerät ein mobiles Kommunikationsgerät, insbesondere ein Smartphone.

Gemäß einem weiteren Aspekt betrifft die Erfindung ein Verfahren zum Erfassen eines Identifikationsdokumentes, das eine maschinenlesbare Zone mit darin gespeicherten Daten und einen Barcode mit einem Duplikat der in der maschinenlesbaren Zone angeordneten Daten umfasst. Das Verfahren umfasst eine optische Aufnahme eines Abbildes des Barcodes, eine Extraktion der Daten der maschinenlesbaren Zone aus der Aufnahme des Barcodes und ein Verarbeiten der extrahierten Daten beispielsweise gemäß dem ICAO Dokument 9303.

Weitere Verfahrensschritte ergeben sich aus der Funktionalität des erfindungsgemäßen Dokumentenlesegerätes.

Gemäß einem weiteren Aspekt betrifft die Erfindung ein Computerprogramm mit einem Programmcode zum Ausführen eines der erfindungsgemäßen Verfahren, wenn das Programm auf einem Computer abläuft.

Weitere Ausführungsbeispiele werden Bezug nehmend auf die beiliegenden Zeichnungen erläutert. Es zeigen:
- Fig. 1: ein schematisiertes Identifikationsdokument gemäß einer Ausführungsform;
- Fig. 2: ein Blockdiagramm eines Dokumentenlesegerätes gemäß einer Ausführungsform; und
- Fig. 3: ein Diagramm eines Verfahrens zum Erfassen eines Identifikationsdokumentes gemäß einer Ausführungsform.

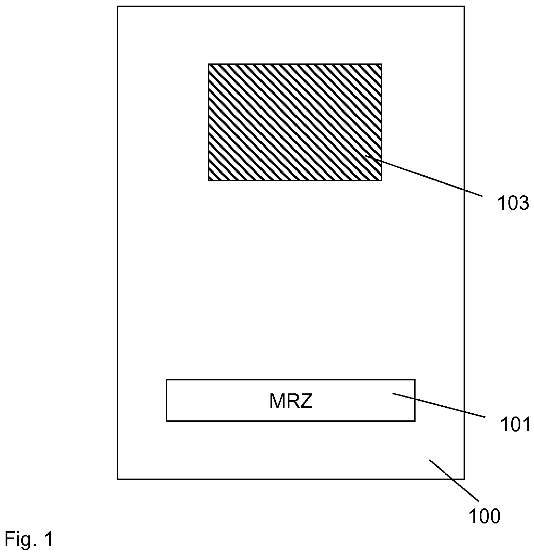

Fig. 1 zeigt ein Identifikationsdokument 100 gemäß einer Ausführungsform mit einer maschinenlesbaren Zone 101 (MRZ: Machine Readable Zone). Die MRZ 101 kann gemäß dem ICAO Dokument 9303 gestaltet sein. Das Dokument 100 kann einen Barcode 103 umfassen, welcher ein Duplikat der in der MRZ 101 angeordneten Daten bereitstellt, d.h. umfasst bzw. speichert. Der Barcode 103 kann anhand der Daten der MRZ 101 mit Hilfe von an sich bekannten Barcode-Erzeugungsverfahren erzeugt werden bzw. sein.

Das Identifikationsdokument 100 kann ein Reisedokument oder ein Personalausweis oder ein anderes Identifikationsdokument sein.

Der Barcode 103 kann ein zweidimensionaler Barcode sein, der beispielsweise ein QR-Code sein kann. Dieser stellt auf relativ kleinem Raum eine Vielzahl von Informationen bereit. Der Barcode 103 kann ferner in einer Größe und/oder Form und/oder mit einer bestimmten Symbolgröße derart bereitgestellt werden, dass der Barcode 103 mit einer herkömmlichen Aufnahmeoptik aus geringer Entfernung, welche beispielsweise einige Millimeter oder Zentimeter betragen kann, wie sie bei einem Dokumentenlesegerät üblich ist, erfasst werden kann.

Der Barcode 103 kann gemäß einer Ausführungsform mit einer Wellenlängen-verschiebenden Tinte oder Druckfarbe aufgebracht worden sein, beispielsweise mit fluoreszierenden Substanzen. Gemäß einer Ausführungsform können Infrarot-intransparente Materialien verwendet werden, beispielsweise schwarze Infrarot-intransparente Materialien auf einem schwarzen Untergrund. Darüber hinaus können metamere Farbenpaare vorgesehen sein. Auf diese Weise wird sichergestellt, dass ein hinreichender Kontrast für das Dokumentenlesegerät bereitgestellt werden kann.

Gemäß einer Ausführungsform können mehrere Barcodes vorgesehen sein, welche beispielsweise an beiden Seiten eines freien Bereichs des Identifikationsdokumentes 100 angebracht sein können. Auf diese Weise wird in vorteilhafter Weise erreicht, dass auch Identifikationsdokumente, welche unsorgfältig auf ein Dokumentenlesegerät aufgelegt sind, ausgelesen werden können.
Gemäß einer Ausführungsform ist die Pixelbreite und/oder die Symbolbandbreite des Barcodes 103 so klein gewählt, dass nach dem Abtasttheorem ein Dokumentenlesegerät mit einer herkömmlichen Auflösung eine Auslesung vornehmen kann. Auf diese Weise wird in vorteilhafter Weise verhindert, dass der Barcode 103 aus der Ferne ausgespäht werden kann.

Gemäß einer weiteren Ausführungsform kann der Barcode 103 über die Daten der MRZ hinaus auch ein Zertifikat eines Dokumentenherstellers, beispielsweise CV oder CVCA, umfassen, welcher in den Barcode 103 hineincodiert ist. Auf diese Weise wird erreicht, dass ein etwaiger Chip auf einem Identifikationsdokument nicht mehr aufgeschlossen werden muss, so dass beispielsweise eine schnellere Abfertigung bei einer Dokumentenkontrolle in Selbstbedienung möglich ist. Darüber hinaus wird das Prüfverfahren beschleunigt, da ein kryptographisches Aufschließen eines Chips üblicherweise zeitaufwändig ist und mehrere Sekunden dauern kann. Der Speicherbedarf derartiger Daten ist jedoch üblicherweise gering, so dass ein BarcodeBereich ausreichend ist, um diese Daten aufzunehmen.

Gemäß einer Ausführungsform können zusätzlich biometrische Daten oder Teile von biometrischen Daten, beispielsweise Templates, durch den Barcode 103 bereitgestellt oder zum späteren Auslesen abgelegt werden. Ein Template ist beispielsweise ein Schema mit einer Merkmalsklassifizierung, das nicht die gesamte graphische biometrische Information, sondern nur beispielsweise Merkmale und deren Ausprägungsgrade enthält. Hierbei können beispielsweise Polygonzüge oder dergleichen eingesetzt werden.

Gemäß einer Ausführungsform kann der Barcode 103 außen auf einem Identifikationsdokument, beispielsweise auf einem Passbuch, aufgebracht werden, so dass das Identifikationsdokument bzw. dessen Chip auch in einem nicht aufgeklappten Zustand kryptographisch geöffnet werden kann.

Gemäß einer Ausführungsform kann der Barcode 103 ausschließlich zur Identifizierung eines Benutzers herangezogen werden.

Gemäß einer Ausführungsform kann der Barcode mehrmals, beispielsweise zweimal, an verschiedenen Stellen des Identifikationsdokumentes 100, beispielsweise auf einer Datenseite, angebracht werden. Durch diese zusätzliche Redundanz können Reflexe an einer Stelle, welche ein optisches Auslesen erschweren, ausgeglichen werden. Darüber hinaus können auf diese Weise nicht vollständig aufgelegte Datenseiten eines Identifikationsdokumentes erfasst werden.

Gemäß einer Ausführungsform kann der Barcode 103 beispielsweise eine an sich bekannte Fehlerkorrektur aufweisen, welche bei fehlerhaftem Auslesen des Barcodes 103 zum Korrigieren der fehlerhaften Daten verwendet werden kann. Dadurch wird die Fehlerquote weiter reduziert. Darüber hinaus kann das Auslesen des Barcodes 103 so zuverlässiger gestaltet werden, wodurch die Stabilität des Auslesens der MRZ 101 insgesamt deutlich verbessert werden kann.

Gemäß einer Ausführungsform nimmt der Barcode 103 eine deutlich kleinere Fläche ein als die MRZ 101. Damit kann sichergestellt werden, dass das Identifikationsdokument 100 auch dann noch elektronisch lesbar ist, beispielsweise mittels Basic Access Control (BAC), wenn nicht die ganze Datenseite des Identifikationsdokumentes 100 erfasst werden kann. Dies kann beispielsweise bei einer Verdrehung des Identifikationsdokumentes der Fall sein. Sind gemäß einer Ausführungsform mehr Barcodes mit Duplikaten der Daten der MRZ 101 vorgesehen, so können diese örtlich so angebracht werden, dass beispielsweise in jedem Ausschnitt in der Form eines Quadrates mit einer Kantenlänge einer kürzeren Seite des Identifikationsdokumentes, beispielsweise bei einem ID-3-Format, mindestens einer der Barcodes in diesem Ausschnitt angeordnet und daher erfassbar ist.

Gemäß einer Ausführungsform können die Daten der MRZ 101 in dem Barcode 103 mit den gleichen Mechanismen wie in der Datengruppe 1 eines elektronischen Dokumentes gemäß ICAO Dokument 9303 signiert sein, indem ihnen ein Hash-Wert hinzugefügt wird. Die verwendeten Signaturverfahren können beispielsweise in Anlehnung an die in der elektronischen Komponente verwendeten Signaturverfahren gestaltet sein. Gemäß einer Ausführungsform kann auf diese Weise ein elektronisches Auslesen des Identifikationsdokumentes 100 vermieden werden, wenn insbesondere nur ein Zugriff auf die MRZ Daten in der Datengruppe 1 (DG1) erforderlich ist. Dies kann insbesondere im Falle einer Prüfung einer Authentizität der Daten anhand ihrer Signatur der Fall sein.

Gemäß ICAO Dokument 9303 soll die MRZ 101 im so genannten B900-Band mit Wellenlängen zwischen 850 nm und 950 nm lesbar sein. Insbesondere wird gefordert, dass Hintergrunddrucke in diesem Wellenlängenbereich sich summieren oder verschwinden. Gemäß einer Ausführungsform kann daher ein Hintergrund des Barcodes 103 diesbezüglich die gleiche Eigenschaft aufweisen, so dass der Barcode 103 mit Near-Infrarot-Licht (NIR) auslesbar ist. Alternativ oder zusätzlich kann der Barcode 103 so gestaltet sein, dass dieser mit Weißlicht ausgelesen werden kann. Hierbei kann beispielsweise ein Farbfilter, insbesondere ein Software-Farbfilter, das auf dem Prozessor 203 implementiert sein kann, verwendet werden.

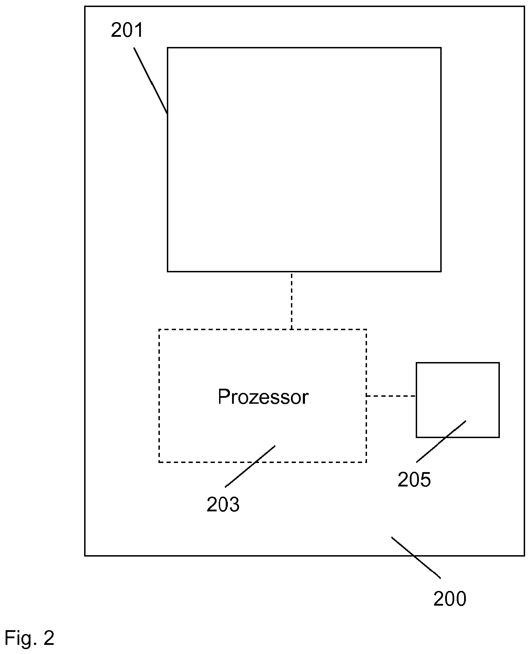

Dadurch kann in vorteilhafter Weise ein Auslesen eines elektronischen Identifikationsdokumentes mit einem Chip, insbesondere eines Reisedokumentes, mit standardmäßig vorhandener Hardware, wie etwa einem Smartphone, realisiert werden. So kann beispielsweise das in Fig. 2 dargestellte Dokumentenlesegerät gemäß einer Ausführungsform als Smartphone ausgeführt sein, wobei die optische Aufnahmeeinrichtung 201 eine Kamera sein kann, welche im Weißlichtbereich Bilder aufnehmen kann. Darüber hinaus kann an sich übliches Programm zum Extrahieren von Daten aus dem Barcode mittels einer Applikationssoftware auf dem Prozessor 203 ausgeführt werden, um die MRZ-Daten zu extrahieren. Gemäß einer weiteren Ausführungsform kann die Aufnahmeeinrichtung 201 ein NFC-Leser sein.

Gemäß einer Ausführungsform umfasst das Identifikationsdokument 100 neben den Daten in der MRZ 101 weitere Daten, welche beispielsweise in einer visuellen Inspektionszone (so genannten Visual Inspection Zone), welche außerhalb der MRZ 101 angeordnet ist. Darüber hinaus kann der Barcode 103 Daten von einer Rückseite des Identifikationsdokuments 100 aufweisen. Diese Daten können beispielsweise eine Adresse oder eine Ausweise ausstellende Behörde oder eine Körpergröße des Benutzers des Identifikationsdokumentes 100 angeben.

Gemäß einer Ausführungsform können zusätzlich zu den Daten der MRZ 101 biometrische Daten, insbesondere biometrische Daten eines Gesichts eines Benutzers des Identifikationsdokumentes 100, in dem Barcode 103 gespeichert sind. Hierzu kann vorteilhaft sein, eine Datenreduktion zu erreichen. Dies kann beispielsweise durch Verwendung so genannter Templates aus extrahierten Daten bewirkt werden, wodurch ein kompakter Barcode realisiert werden kann.

Gemäß einer Ausführungsform können zusätzlich zu den Daten der MRZ 101 in dem Barcode 103 zugangsbeschränkte biometrische Daten, wie beispielsweise Fingerabdrücke, gespeichert sein. Hierbei können ebenfalls Templates verwendet werden, um eine Datenreduktion zu erreichen. Die Zutrittsbeschränkung kann beispielsweise durch eine Verschlüsselung nach einem der bekannten Verfahren realisiert werden.

Gemäß einer Ausführungsform können mehrere Barcodes auf einem vorderen oder hinteren Einband des Identifikationsdokumentes 100, falls dieses beispielsweise ein Reisepass ist, aufgebracht sein. Diese Barcodes können beispielsweise als Aufkleber, d.h. auf einem aufklebbaren Träger, gebildet sein. Dadurch wird vorteilhaft ermöglicht, dass das Identifikationsdokument 100 zwecks Auslesen der Daten der MRZ 101 nicht mehr aufgeklappt werden muss.
Fig. 2 zeigt ein Blockdiagramm eines Dokumentenlesegerätes 200 zum Erfassen eines Identifikationsdokumentes, das einen Barcode mit Daten der MRZ umfasst. Das Dokumentenlesegerät 200 umfasst eine optische Aufnahmeeinrichtung 201, beispielsweise eine Kamera, welche einen CCD-Sensor aufweisen kann, für die Aufnahme eines Barcodes. Das Dokumentenlesegerät 200 umfasst ferner einen Prozessor 203, welcher ausgebildet ist, aus der Aufnahme des Barcodes Daten der MRZ 101 zu extrahieren und diese Daten MRZ-spezifisch zu verarbeiten. Die Verarbeitung kann beispielsweise gemäß dem ICAO Dokument 9303 erfolgen.

Das Dokumentenlesegerät 200 umfasst ferner eine optionale Schnittstelle 205 zum Kommunizieren mit einem Chip eines Identifikationsdokumentes beispielsweise auf der Basis von RFID-Signalen. So kann der Prozessor 203 auf der Basis der aus dem Barcode entnommenen Daten der MRZ 101 ein Berechtigungssignal zum Aufschließen des Chips auf dem Identifikationsdokument erzeugen, wobei dieses Signal mittels der Schnittstelle 205 dem Chip zugeleitet werden kann. Die Schnittstelle 205 kann beispielsweise eine RFID-Schnittstelle sein, welche ausgebildet ist, ein RFID-Signal auszusenden.

Der Prozessor 203 kann ausgebildet sein, die optische Aufnahmeeinrichtung 201 und/oder die Schnittstelle 205 zu steuern.

Das Dokumentenlesegerät 200 kann ein stationäres Gerät oder ein mobiles Kommunikationsgerät, beispielsweise ein Smartphone, sein.

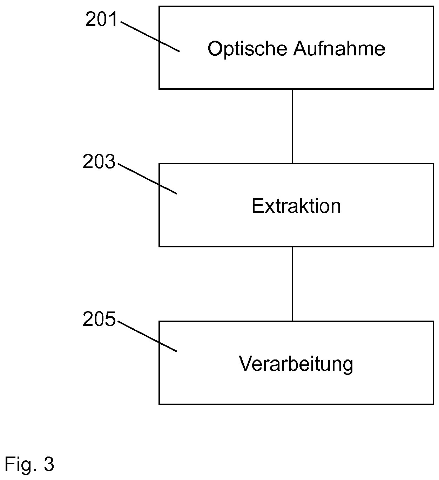

Fig. 3 zeigt ein Diagramm eines Verfahrens zum Erfassen eines Identifikationsdokumentes, das eine maschinenlesbare Zone mit darin angeordneten Daten sowie einen Barcode mit einem Duplikat der in der maschinenlesbaren Zone (MRZ) angeordneten Daten umfasst. Das Verfahren umfasst eine optische Aufnahme 201 des Barcodes, eine Extraktion 205 der Daten der MRZ aus der Aufnahme des Barcodes und eine Verarbeitung 205 der extrahierten Daten beispielsweise gemäß ICAO Dokument 9303.

Das in Fig. 3 dargestellte Verfahren kann beispielsweise mittels des in Fig. 2 dargestellten Dokumentenlesegerätes ausgeführt werden.

### Bezugszeichen

- 100: Identifikationsdokument
- 101: maschinenlesbare Zone
- 103: Barcode
- 200: Dokumentenlesegerät
- 201: optische Aufnahmeeinrichtung
- 203: Prozessor
- 205: Schnittstelle
- 301: Aufnahme
- 303: Extraktion
- 305: Verarbeitung

## Patentansprüche

1. Identifikationsdokument (100) mit in einer maschinenlesbaren Zone (101) angeordneten Daten,
wobei die maschinenlesbare Zone (101) eine maschinenlesbare Zone gemäß ICAO 9303 ist,
wobei das Identifikationsdokument (100) einen Chip aufweist,
wobei die Daten ferner zur Erzeugung eines Berechtigungssignals zum Auslesen eines Chipinhaltes vorgesehen sind, so dass anhand der Daten das Berechtigungssignal erzeugt werden kann,
wobei das Berechtigungssignal dem Chip eine Berechtigung eines Dokumentenlesegerätes anzeigt, den Chipinhalt auszulesen,
**gekennzeichnet durch** einen Barcode (103), welcher ein Duplikat der in der maschinenlesbaren Zone (101) angeordneten Daten bereitstellt.

2. Identifikationsdokument nach Anspruch 1, wobei der Barcode (103) ein zweidimensionaler Barcode, ein Datamatrix-Code, ein gestapelter Barcode, ein Codablock, ein QR-Code, ein Portable Data File 417 Code oder ein Aztec-Code nach ISO/IEC 24778 ist.

3. Identifikationsdokument nach Anspruch 1 oder 2, wobei der Barcode (103) optisch auslesbar ist.

4. Identifikationsdokument nach einem der vorstehenden Ansprüche, wobei der Barcode (103) fluoreszierend oder Wellenlängen-konvertierend ist.

5. Identifikationsdokument nach einem der vorstehenden Ansprüche, wobei der Barcode (103) ein Duplikat von außerhalb der maschinenlesbaren Zone (101) angeordneten Daten umfasst.

6. Identifikationsdokument nach einem der vorstehenden Ansprüche, wobei der Barcode (103) biometrische Daten bereitstellt.

7. Identifikationsdokument nach einem der vorstehenden Ansprüche, das ferner einen weiteren Barcode mit einem weiteren Duplikat der in der maschinenlesbaren Zone (101) angeordneten Daten bereitstellt.

8. Identifikationsdokument nach einem der vorstehenden Ansprüche, wobei der Barcode (103) auf einem Einband des Identifikationsdokumentes (100) oder auf einer Datenseite des Identifikationsdokumentes (100) angeordnet ist.

9. System mit einem Identifikationsdokument (100) gemäß Anspruch 1
J und einem Dokumentenlesegerät (200) zum Erfassen des Identifikationsdokumentes,
wobei das Dokumentenlesegerät eine optische Aufnahmeeinrichtung (201) zur Aufnahme des Barcodes (103) umfasst,
wobei das Dokumentenlesegerät einen Prozessor (203) zum Extrahieren der Daten der maschinenlesbaren Zone (101) aus der Aufnahme des Barcodes und zum Verarbeiten der extrahierten Daten umfasst,
**dadurch gekennzeichnet, dass**
das Dokumentenlesegerät ein Sichtfenster aufweist, das ausgebildet ist, einen definierten Bereich des Barcodes zu erfassen und für die Aufnahme durch die optische Aufnahmeeinrichtung (201) bereitzustellen, wobei der definierte Bereich des Barcodes geringere Abmessungen aufweist als eine Dokumentenseite des Identifikationsdokumentes, und
der Prozessor (203) ausgebildet ist, anhand der aus dem Barcode extrahierten Daten ein Berechtigungssignal zu erzeugen, um dem Chip eine Berechtigung des Dokumentenlesegerätes (200) zum Auslesen eines Chipinhaltes anzuzeigen.

10. System nach Anspruch 9, wobei der Prozessor (203) ausgebildet ist, die extrahierten Daten zur Überprüfung einer Echtheit des Identifikationsdokumentes und/oder zur Identifikation eines Benutzers des Identifikationsdokumentes anhand der aus dem Barcode extrahierten Daten zu verarbeiten.

11. System nach Anspruch 9 oder 10, wobei das Dokumentenlesegerät (200) ein mobiles Kommunikationsgerät, insbesondere ein Smartphone, ist.

12. Verfahren zum Erfassen eines Identifikationsdokumentes nach einem der Ansprüche 1 bis 8, mit:
optischer Aufnahme (301) des Barcodes;
Extrahieren (303) der Daten der maschinenlesbaren Zone aus der Aufnahme des Barcodes; und
Verarbeiten (305) der extrahierten Daten,
**gekennzeichnet durch**:
Erfassen eines definierten Bereichs des Barcodes durch ein Sichtfenster in einem Dokumentenlesegerät und Bereitstellen des definierten Bereichs des Barcodes für die optische Aufnahme des Barcodes, wobei der definierte Bereich des Barcodes geringere Abmessungen aufweist als eine Dokumentenseite des Identifikationsdokumentes,
wobei anhand der aus dem Barcode extrahierten Daten ein Berechtigungssignal erzeugt wird, um dem Chip eine Berechtigung des Dokumentenlesegeräts zum Auslesen eines Chipinhaltes anzuzeigen.

## Claims

1. Identification document (100) comprising data arranged in a machine-readable zone (101),
wherein the machine-readable zone is a machine-readable zone according to ICAO 9303,
wherein the identification document (100) comprises a chip,
wherein the data is intended for generating an authorization signal to read out a chip content so that the authorization signal is generated based on the data,
wherein the authorization signal indicates an authorization to the chip for a document reader to read out the chip content,
**characterized by** a barcode (103) which provides a duplicate of the data arranged in the machine-readable zone (101).

2. The identification document according to claim 1, wherein the barcode (103) is a two-dimensional barcode, a data matrix code, a stacked barcode, a Codablock, a QR code, a Portable Data File 417 code or an Aztec code according to ISO/IEC 24778.

3. The identification document according to claim 1 or 2, wherein the barcode (103) is optically readable.

4. The identification document according to one of the preceding claims, wherein the barcode (103) is fluorescent or has wavelength-converting properties.

5. The identification document according to one of the preceding claims, wherein the barcode (103) comprises a duplicate of data arranged outside of the machine-readable zone (101).

6. The identification document according to one of the preceding claims, wherein the barcode (103) provides biometric data.

7. The identification document according to one of the preceding claims, further providing a further barcode having a further duplicate of the data arranged in the machine-readable zone (101).

8. The identification document according to one of the preceding claims, wherein the barcode (103) is arranged on a cover of the identification document (100) or on a data page of the identification document (100).

9. A system having an identification document according to claim 1 and a document reader (200) for capturing the identification document, wherein the document reader comprises an optical recording device (201) for recording the barcode (103), wherein the document reader comprises a processor (203) to extract the data of the machine-readable zone (101) from the recording of the barcode and for processing the extracted data,
**characterized by**,
the document reader has an inspection window configured to capture a defined area of the barcode and to provide it for the recording of the optical recording device (201), wherein the defined area of the barcode has smaller dimensions than a document page of the identification document, and
the processor is configured to generate an authentication signal based on the extracted data to indicate the chip an authentication for the document reader (200) to read out the chip content.

10. The system according to claim 9, wherein the processor (203) is configured to process the extracted data to verify an authenticity of the identification document and/or to identify a user of the identification document based on the extracted data from the barcode.

11. The system according to claim 9 or 10, wherein the document reader (200) is a mobile communication device, in particular a smart phone.

12. A method to capture an identification document according to one of the claims 1 to 8, the method comprising:
optical recording (301) the barcode;
extracting (303) the data of the machine-readable zone from the recording of the barcode; and
processing (305) the extracted data,
**characterized by**:
capturing a predefined area of the barcode by an inspection window in a document reader and providing the defined area of the barcode for the optical recording of the barcode, the defined area of the barcode having smaller dimensions than a document page of the identification document,
wherein an authorization signal is generated based on the extracted data from the barcode to indicate an authorization to the chip for the document reader to read out the chip content.

## Revendications

1. Document d'identification (100) comprenant des données disposées dans une zone lisible par machine (101), la zone lisible par machine (101) étant une zone lisible par machine selon ICAO 9303, le document d'identification (100) présentant une puce, les données étant en outre prévues pour générer un signal d'autorisation pour lire le contenu d'une puce de sorte que le signal d'autorisation peut être généré à l'aide des données, le signal d'autorisation affichant pour la puce une autorisation d'un lecteur de document de lire le contenu de la puce,
**caractérisé par** un code à barres (103) qui fournit une copie des données disposées dans la zone lisible par machine (101).

2. Document d'identification selon la revendication 1, dans lequel le code à barres (103) est un code à barres bidimensionnel, un code Datamatrix, un code à barres empilé, un Codablock, un code QR, un code « Portable Data File 417 » ou un code Aztec selon ISO/IEC 24778.

3. Document d'identification selon la revendication 1 ou 2, dans lequel le code à barres (103) peut être lu de manière optique.

4. Document d'identification selon l'une quelconque des revendications précédentes, dans lequel le code à barres (103) est fluorescent ou à conversion de longueur d'onde.

5. Document d'identification selon l'une quelconque des revendications précédentes, dans lequel le code à barres (103) comprend une copie de données disposées à l'extérieur de la zone lisible par machine (101).

6. Document d'identification selon l'une quelconque des revendications précédentes, dans lequel le code à barres (103) fournit des données biométriques.

7. Document d'identification selon l'une quelconque des revendications précédentes, qui fournit en outre un code à barres supplémentaire avec une copie supplémentaire des données disposées dans la zone lisible par machine (101).

8. Document d'identification selon l'une quelconque des revendications précédentes, dans lequel le code à barres (103) est disposé sur une couverture du document d'identification (100) ou sur une page de données du document d'identification (100).

9. Système comprenant un document d'identification (100) selon la revendication 1 et un lecteur de document (200) pour détecter le document d'identification, le lecteur de document comprenant un dispositif d'enregistrement optique (201) pour enregistrer le code à barres (103), le lecteur de document comprenant un processeur (203) pour extraire les données de la zone lisible par machine (101) à partir de l'enregistrement du code à barres et pour traiter les données extraites,
**caractérisé en ce que** le lecteur de document présente une fenêtre de visualisation qui est réalisée pour détecter une zone définie du code à barres et pour la fournir pour l'enregistrement par le dispositif d'enregistrement optique (201), la zone définie du code à barres ayant des dimensions inférieures à une page de document du document d'identification, et le processeur (203) étant réalisé pour générer un signal d'autorisation à l'aide des données extraites du code à barres afin d'afficher pour la puce une autorisation du lecteur de document (200) de lire le contenu d'une puce.

10. Système selon la revendication 9, dans lequel le processeur (203) est réalisé pour traiter les données extraites afin de vérifier l'authenticité du document d'identification et/ou pour identifier un utilisateur du document d'identification à l'aide des données extraites du code à barres.

11. Système selon la revendication 9 ou 10, dans lequel le lecteur de document (200) est un appareil de communication mobile, en particulier un smartphone.

12. Procédé de détection d'un document d'identification selon l'une quelconque des revendications 1 à 8, comprenant les étapes consistant à :
enregistrer (301) le code à barres de manière optique ; extraire (303) les données de la zone lisible par machine à partir de l'enregistrement du code à barres ; et
traiter (305) les données extraites,
**caractérisé par** les étapes consistant à :
détecter une zone définie du code à barres à travers une fenêtre de visualisation dans un lecteur de document et fournir la zone définie du code à barres pour l'enregistrement optique du code à barres, la zone définie ayant des dimensions inférieures à une page de document du document d'identification,
dans lequel un signal d'autorisation est généré à partir des données extraites du code à barres afin d'afficher pour la puce une autorisation du lecteur de document de lire le contenu de la puce.
